# EUROPÄISCHE PATENTSCHRIFT

(11) **EP 3 817 930 B1**
(45) Veröffentlichungstag und Bekanntmachung des Hinweises auf die Patenterteilung: **15.05.2024**
(21) Anmeldenummer: 19737049.7
(22) Anmeldetag: 03.07.2019
(51) Int. Cl.: B60C 23/04

(54) **VERFAHREN ZUR DETEKTION EINER FEHLERHAFTEN ANORDNUNG EINES SENSORMODULS IN EINER SENSORMODULHALTERUNG BEI EINEM REIFENÜBERWACHUNGSSYSTEM EINES FAHRZEUGES UND REIFENÜBERWACHUNGSSYSTEM**
METHOD FOR DETECTING A FAULTY ARRANGEMENT OF A SENSOR MODULE IN A SENSOR MODULE HOLDER IN A TYRE MONITORING SYSTEM OF A VEHICLE AND TYRE MONITORING SYSTEM
PROCÉDÉ DE DÉTECTION D'UN ENSEMBLE DÉFECTUEUX D'UN MODULE CAPTEUR DANS UN ÉLÉMENT DE RETENUE DE MODULE CAPTEUR POUR UN SYSTÈME DE SURVEILLANCE DE PNEUMATIQUE D'UN VÉHICULE ET SYSTÈME DE SURVEILLANCE DE PNEUMATIQUE

(30) Priorität: 06.07.2018 DE 102018211211
(43) Veröffentlichungstag der Anmeldung: 12.05.2021
(73) Patentinhaber: Continental Automotive Technologies GmbH, 30175 Hannover (DE)
(72) Erfinder: DHARAMSHI, Parthiv, 81737 München (DE); KRETSCHMANN, Matthias, 81737 München (DE); YOU, Shichao, 81737 München (DE); LÖFFLER, Michael, 81737 München (DE)
(74) Vertreter: Continental Corporation
(86) Internationale Anmeldenummer: PCT/EP2019/067796
(87) Internationale Veröffentlichungsnummer: WO 2020/007890

(56) Entgegenhaltungen:
- WO-A1-2014/041060
- WO-A1-2018/003734
- WO-A1-2018/042112
- DE-A1-102009 044 573
- DE-A1-102012 216 576

## Beschreibung

Die vorliegende Erfindung betrifft das Gebiet von Reifenüberwachungssystemen bei mit Reifen ausgestatteten Fahrzeugen.

Reifenüberwachungssysteme werden beispielweise bei modernen Straßenkraftfahrzeugen (z. B. PKW, LKW etc.) eingesetzt und umfassen typischerweise mehrere in einer jeweiligen Sensormodulhalterung eines jeweiligen Reifens des Fahrzeuges angeordnete Sensormodule, die jeweils in Abhängigkeit von wenigstens einer sensorisch erfassten Größe (z. B. Druck, Temperatur, Beschleunigung etc.) wenigstens einen Betriebsparameter des betreffenden Reifens (z. B. Reifendruck, Reifentemperatur etc.) ermitteln und per Funk an eine im Fahrzeug angeordnete Empfangs- und Auswerteeinrichtung senden.

Die Funksendungen, zumeist in Form von digitalen Datentelegrammen, erfolgen in der Regel von Zeit zu Zeit, gemäß einer in den Sensormodulen festgelegten Sendestrategie.

Als Betriebsparameter kann hierbei z. B. unmittelbar eine der sensorisch erfassten Größen verwendet werden, was z. B. für die Größen Druck und Temperatur zweckmäßig ist, um entsprechende Reifenbetriebsparameter "Reifendruck" bzw. "Reifentemperatur" an die im Fahrzeug angeordnete Empfangs- und Auswerteeinrichtung zu übermitteln.

Demgegenüber wird eine von den Sensormodulen sensorisch erfasste Beschleunigung (z. B. eine Radialbeschleunigung) typischerweise nicht als solche als ein zu übermittelnder Betriebsparameter verwendet, sondern es findet seitens der Sensormodule basierend auf einer Auswertung eines zeitlichen Verlaufs der Beschleunigung und gegebenenfalls Mitberücksichtigung einer oder mehrerer weiterer Größen die Ermittlung eines oder mehrerer Betriebsparameter statt, die dann zwar von der erfassten Beschleunigung abhängen, diese Beschleunigung jedoch nicht als solche repräsentieren.

Beispielsweise wird in dieser Weise aus der sensorisch erfassten Beschleunigung oftmals die Drehgeschwindigkeit des betreffenden Fahrzeugrades bzw. Fahrzeugreifens ermittelt und als Betriebsparameter in die Datensendungen aufgenommen.

Darüber hinaus ist es z. B. möglich, in Abhängigkeit von der sensorisch erfassten Beschleunigung einen Betriebsparameter zu ermitteln, der repräsentativ für eine Länge einer Reifenaufstandsfläche des betreffenden Reifens ist, welche oftmals auch als Reifenlatsch bezeichnet wird.

Die in den einzelnen Reifen angeordneten Sensormodulhalterungen ermöglichen vorteilhaft einen einfachen nachträglichen Austausch eines Sensormoduls z. B. im Falle eines Defekts des Sensormoduls oder im Falle einer erschöpften elektrischen Batterie des Sensormoduls.

Bei der Verwendung derartiger Sensormodulhalterungen hat sich dabei herausgestellt, dass eine fehlerhafte (z. B. leicht verkippte) Anordnung eines Sensormoduls in einer Sensormodulhalterung insbesondere das Ergebnis einer sensorischen Erfassung einer Beschleunigung nennenswert verfälschen kann. In der Folge können dann prinzipiell auch sämtliche in Abhängigkeit von der erfassten Beschleunigung ermittelten Betriebsparameter verfälscht werden.

Aus WO 2018/042112 A1 ist ein Verfahren zur Detektion einer fehlerhaften Anordnung eines Sensormoduls in einer Sensormodulhalterung in einem Reifen bekannt.

Offenbart werden in DE 10 2009 044573 A1, WO 2018/003734 A1 und DE 10 2012 216576 A1 verschiedene Verfahren und Vorrichtungen zur Erkennung von nicht ordnungsgemäß befestigten oder verbauten Sensoren. Aus WO 2014/041060 A1 ist weiter eine Vorrichtung zum Speichern von Reifeninformation in einem Reifensensor bekannt.

Es ist somit eine Aufgabe der vorliegenden Erfindung, bei einem Reifenüberwachungssystem dessen Zuverlässigkeit im Hinblick auf eine fehlerhafte Anordnung eines Sensormoduls in der betreffenden Sensormodulhalterung zu verbessern.

Die genannte Aufgabe wird durch ein Verfahren nach Anspruch 1 bzw. ein Reifenüberwachungssystem nach Anspruch 9 gelöst. Die abhängigen Ansprüche sind auf vorteilhafte Weiterbildungen der Erfindung gerichtet.

Ein erster Aspekt der Erfindung betrifft ein Verfahren zur Detektion einer fehlerhaften Anordnung eines Sensormoduls in einer Sensormodulhalterung in einem Reifen eines mit einem Reifenüberwachungssystem ausgestatteten Fahrzeuges, wobei das Reifenüberwachungssystem mehrere in einer jeweiligen Sensormodulhalterung eines jeweiligen Reifens des Fahrzeuges angeordnete Sensormodule aufweist, die jeweils in Abhängigkeit von einer sensorisch erfassten Beschleunigung an der Anordnungsstelle des Sensormoduls einen Betriebsparameter des betreffenden Reifens ermitteln und drahtlos an eine in dem Fahrzeug angeordnete Empfangs- und Auswerteeinrichtung senden, wobei eine Detektion einer fehlerhaften Anordnung eines Sensormoduls der mehreren Sensormodule in der betreffenden Sensormodulhalterung dadurch erfolgt, dass basierend auf einem Vergleich der von den Sensormodulen ermittelten Betriebsparameter festgestellt wird, dass für dieses Sensormodul eine von einer Geschwindigkeit des Fahrzeuges abhängige Abweichung des Betriebsparameters von einem für dieses Sensormodul zu erwartenden Betriebsparameter existiert.

Die Grundidee der Erfindung besteht somit darin, eine fehlerhafte Anordnung eines Sensormoduls zu detektieren.

Eine Detektion einer fehlerhaften Anordnung eines der Sensormodule in der betreffenden Sensormodulhalterung kann dabei wie bereits erläutert dadurch bewerkstelligt werden, dass basierend auf einem Vergleich der von den Sensormodulen in Abhängigkeit von den sensorisch erfassten Beschleunigungen an den Anordnungsstellen der Sensormodule ermittelten Betriebsparameter festgestellt wird, dass für dieses Sensormodul eine von der Geschwindigkeit des Fahrzeuges abhängige Abweichung des Betriebsparameters von einem für dieses Sensormodul bei ordnungsgemäßer Anordnung in der Sensormodulhalterung zu erwartenden Betriebsparameter existiert.

Eine fehlerhafte Anordnung eines Sensormoduls bedeutet dabei hier und im Folgenden, dass das Sensormodul nicht in vorgesehener Position und/oder vorgesehener Orientierung von der Sensormodulhalterung im Reifen fixiert ist.

Hierbei kann z. B. der in der Praxis eher unwahrscheinliche Fall einer lockeren, d.h. beweglichen Halterung, oder z. B. der wahrscheinlichere Fall einer zwar mehr oder weniger stabilen, jedoch hinsichtlich Position und/oder Orientierung falschen Halterung vorliegen. Insbesondere kann mit dem Verfahren gemäß dem genannten Aspekt der Erfindung die Detektion eines verkippt in der Sensormodulhalterung installierten Sensormoduls realisiert werden.

Für die meisten praxisrelevanten Fehlanordnungen hat sich herausgestellt, dass dadurch hervorgerufene Verfälschungen des wenigstens einen auf der erfassten Beschleunigung beruhenden Betriebsparameters (d.h. eine Abweichung von dem zu erwartenden Betriebsparameter) eine Abhängigkeit von der momentanen Geschwindigkeit des Fahrzeuges aufzeigen. Daher besitzt die genannte Feststellung einer von der Geschwindigkeit des Fahrzeuges abhängigen Abweichung eine besonders hohe Aussagekraft hinsichtlich der zu detektierenden Fehlanordnung.

Ein Grund für die Geschwindigkeitsabhängigkeit der Abweichung des ermittelten Betriebsparameters kann darin bestehen, dass die geschwindigkeitsabhängig auf das Sensormodul und die Sensormodulhalterung wirkende Zentrifugalkraft in Verbindung mit einer zumeist großen Nachgiebigkeit typischer Reifenmaterialien (z. B. Gummi) und/oder einer oftmals auch aus Gummi oder dergleichen gefertigten Sensormodulhalterung die Position und/oder Orientierung des fehlerhaft angeordneten Sensormoduls entsprechend beeinflusst, d.h. geschwindigkeitsabhängig verändert.

Insbesondere in dieser Hinsicht ist das genannte Verfahren besonders vorteilhaft, wenn die Sensormodulhalterungen jeweils als eine aus einem elastischen Material (Gummi oder dergleichen) gebildete Aufnahme zum Einstecken des jeweiligen Sensormoduls ausgebildet sind.

Die Aufnahme kann z. B. einen wenigstens annähernd zylindrischen Aufnahmeraum begrenzen, in welchen dementsprechend ein Sensormodul mit einer insgesamt oder zumindest bereichsweise passend dimensionierten zylindrischen Formgestaltung einsteckbar ist. Die Zylinderachse kann hierbei insbesondere in Radialrichtung des Reifens verlaufend vorgesehen sein.

In einer Ausführungsform ist vorgesehen, dass die Sensormodulhalterungen jeweils an einer Innenseite einer Reifenlauffläche des jeweiligen Reifens befestigt sind.

Die Befestigung der Sensormodulhalterungen kann insbesondere z. B. durch eine Verklebung im Reifen realisiert sein.

In einer Ausführungsform ist vorgesehen, dass das Reifenüberwachungssystem als ein Reifendrucküberwachungssystem ausgebildet ist, wobei die Sensormodule jeweils einen Druck in dem jeweiligen Reifen erfassen und als einen (weiteren) Betriebsparameter (auch) den Reifendruck des betreffenden Reifens drahtlos an die Empfangs- und Auswerteeinrichtung senden.

Bei dieser Ausführungsform wird also nicht nur eine Beschleunigung an der Anordnungsstelle des Sensormoduls sensorisch erfasst, sondern zumindest auch der Druck in dem betreffenden Reifen.

Alternativ oder zusätzlich zur Erfassung des Drucks in dem jeweiligen Reifen kann auch vorgesehen sein, dass die Sensormodule jeweils eine Temperatur erfassen, z. B. um als weiteren Betriebsparameter des Reifens auch eine Reifentemperatur zu ermitteln und an die fahrzeugseitige Empfangs- und Auswerteeinrichtung zu senden.

In einer Ausführungsform ist vorgesehen, dass die von den Sensormodulen jeweils sensorisch erfasste Beschleunigung an der Anordnungsstelle des betreffenden Sensormoduls eine Radialbeschleunigung und/oder eine Tangentialbeschleunigung beinhaltet. Alternativ oder zusätzlich kann die sensorisch erfasste Beschleunigung jedoch auch wenigstens eine anders orientierte Beschleunigung oder andere Art von Beschleunigung (z. B. mechanischer Schock, Vibration etc.) beinhalten.

Die Erfassung der Radialbeschleunigung hat sich für viele Anwendungen (z. B. die Ermittlung von Drehgeschwindigkeit und/oder Länge einer Reifenaufstandsfläche und/oder Reifenlast) als besonders vorteilhaft herausgestellt.

In einer Ausführungsform ist vorgesehen, dass der von den Sensormodulen jeweils ermittelte Betriebsparameter repräsentativ für eine Länge einer Reifenaufstandsfläche (Reifenlatsch) des betreffenden Reifens ist.

In diesem Sinne repräsentativ für die Länge der Reifenaufstandsfläche ist z. B. ein absolutes Maß dieser Länge, aber auch z. B. ein relatives Maß, welches diese Länge in Beziehung zu einer anderen am betreffenden Reifen feststellbaren Größe wie z. B. einem Reifenumfang oder einem Reifendurchmesser angibt.

In einer Ausführungsform gibt der ermittelte Betriebsparameter das Verhältnis der Länge der Reifenaufstandsfläche zu einem Außenumfang des betreffenden Reifens an, nachfolgend auch als "Reifenaufstandsquotient" (footprint quotient, FPQ) bezeichnet.

Messtechnisch kann die Ermittlung des Reifenaufstandsquotienten in dem betreffenden Sensormodul z. B. dadurch realisiert sein, dass hierfür der Quotient gebildet wird aus derjenigen Zeitspanne, welche dem Durchgang des Sensormoduls durch die Reifenaufstandsfläche entspricht, und derjenigen Zeitspanne, welche einer vollen Reifenumdrehung (360°) entspricht.

In einer Ausführungsform dient das betreffende Reifenüberwachungssystem auch zur Ermittlung von Radlasten, die auf die Räder und somit Reifen des Fahrzeuges wirken.

Für die Realisierung einer solchen Lastüberwachungsfunktionalität kann z. B. insbesondere die Verwendung (Verarbeitung) des vorstehend erwähnten Betriebsparameters vorgesehen sein, der repräsentativ für eine Länge einer Reifenaufstandsfläche ist, wie z. B. der vorgenannte Reifenaufstandsquotient.

Bei der Ermittlung der Radlast an einem bestimmten Reifen kann ein solcher Betriebsparameter z. B. in Verbindung mit dem für diesen Reifen ermittelten Reifendruck und/oder im Sensormodul dieses Reifens gespeicherten Reifeninformationen betreffend Eigenschaften des Reifens verarbeitet werden.

In einer Ausführungsform wird von dem Sensormodul die Radlast des betreffenden Reifens als ein weiterer Betriebsparameter ermittelt und gesendet.

Bei sehr kleinen Fahrzeuggeschwindigkeiten, z. B. kleiner als etwa 10 km/h, sind geschwindigkeitsabhängige Effekte der auf das Sensormodul wirkenden Zentrifugalkraft tendenziell vernachlässigbar bzw. messtechnisch eher nur ungenau feststellbar.

Bei sehr hohen Fahrzeuggeschwindigkeiten, z. B. größer als etwa 100 km/h, ist zwar die Zentrifugalkraft relativ groß, jedoch sind auch in diesem Fall oftmals aufgrund einer gewissen Sättigung des Einflusses der Zentrifugalkraft auf Position und/oder Orientierung des Sensormoduls nur relativ kleine geschwindigkeitsabhängige Effekte hinsichtlich der Abweichung des ermittelten Betriebsparameters von dem zu erwartenden Betriebsparameter zu beobachten.

Insbesondere unter diesem Aspekt ist gemäß einer Ausführungsform vorgesehen, dass die Feststellung der Abweichung in einem vorbestimmten Teilbereich eines für das Fahrzeug betriebsmäßig vorgesehenen Gesamtbereichs der Geschwindigkeit des Fahrzeuges erfolgt.

In einer Ausführungsform ist der genannte Teilbereich mit einer Untergrenze vorbestimmt (z. B. fest vorgegeben), die z. B. mindestens 0 km/h, insbesondere mindestens 5 km/h betragen kann, und z. B. höchstens 60 km/h, insbesondere höchstens 50 km/h betragen kann.

In einer Ausführungsform ist der genannte Teilbereich mit einer Obergrenze vorbestimmt (z. B. fest vorgegeben), die z. B. höchstens 150 km/h, insbesondere höchstens 100 km/h betragen kann, und z. B. mindestens 60 km/h, insbesondere mindestens 70 km/h betragen kann.

Eine derartige Fokussierung auf nur einen Teilbereich von Fahrzeuggeschwindigkeiten beeinflusst vorteilhaft die Qualität bzw. Zuverlässigkeit der vorgesehenen Detektion.

In einer Ausführungsform der Erfindung ist für eine Ermittlung der Fahrzeuggeschwindigkeit beispielweise vorgesehen, dass die Geschwindigkeit des Fahrzeuges basierend auf einer Erfassung der Drehgeschwindigkeit eines oder mehrerer (z. B. Mittelwertbildung) der mit den Reifen versehenen Fahrzeugräder erfolgt, wobei jede dieser Erfassungen wiederum durch eine an dem betreffenden Fahrzeugrad im Fahrzeug angeordnete Sensoreinrichtung (z. B. einen Drehzahlgeber) und/oder basierend auf der von dem Sensormodul im Reifen dieses Fahrzeugrades durchgeführten sensorischen Erfassung der Beschleunigung realisiert sein kann.

Alternativ oder zusätzlich zur Erfassung wenigstens einer derartigen Raddrehgeschwindigkeit kann für die Erfassung der Fahrzeuggeschwindigkeit auch ein satellitengestützten Positionsbestimmungssystem (z. B. GPS) genutzt werden.

In einer Ausführungsform ist vorgesehen, dass die Feststellung der Abweichung eine Feststellung einer mit variierender Geschwindigkeit des Fahrzeuges monoton sich verändernden Abweichung beinhaltet.

Auch diese Maßnahme trägt in vielen Fällen zu einer Verbesserung der Qualität der genannten Detektion bei. Da der erläuterte Einfluss der geschwindigkeitsabhängig auf das Sensormodul wirkenden Zentrifugalkraft einen solchen monotonen Zusammenhang erwarten lässt, besitzt die Feststellung einer derartigen Monotonie eine hohe Aussagekraft für die Detektion der Fehlanordnung des Sensormoduls.

Prinzipiell kommt für die Feststellung einer mit variierender Geschwindigkeit des Fahrzeuges monoton sich verändernden Abweichung sowohl die Variante in Betracht, bei der mit steigender Fahrzeuggeschwindigkeit eine sich vergrößernde Abweichung als Kriterium für das Vorliegen einer Fehlanordnung des betreffenden Sensormoduls verwendet wird, als auch die Variante, bei der mit steigender Fahrzeuggeschwindigkeit eine sich verkleinernde Abweichung als ein solches Kriterium verwendet wird.

Die letztere Variante, bei der die Feststellung einer mit steigender Geschwindigkeit sich verkleinernden Abweichung vorgesehen ist, eignet sich besonders gut zur Detektion einer in der Praxis häufigen Fehlanordnung des Sensormoduls, die darin besteht, dass das Sensormodul etwas verkippt und/oder nicht ordnungsgemäß (d.h. vollständig) versenkt in der betreffenden Sensormodulhalterung gehalten ist.

In diesem häufigen Fall führen die Verkippung und der falsche Abstand des Sensormoduls von dem Reifenmaterial insbesondere bei relativ niedrigen Fahrzeuggeschwindigkeiten zu einer Verfälschung des ermittelten Betriebsparameters und somit zu einer relativ großen Abweichung des Betriebsparameters von dem zu erwartenden Betriebsparameter, wohingegen mit steigender Fahrzeuggeschwindigkeit das Sensormodul aufgrund der größeren Zentrifugalkraft tendenziell aufgerichtet und näher an das Reifenmaterial herangedrückt bzw. in die Sensormodulhalterung hineingedrückt wird, wodurch die Abweichung des ermittelten Betriebsparameters kleiner wird bzw. nicht mehr als signifikant feststellbar ist.

Bei dem genannten Verfahren wird die Detektion einer fehlerhaften Anordnung bevorzugt in einer parallelen, d.h. im Wesentlichen zeitgleichen oder zeitlich überlappenden, Verarbeitungsweise für sämtliche Sensormodule des betreffenden Reifenüberwachungssystems durchgeführt, wobei basierend auf dem Vergleich der von sämtlichen Sensormodulen ermittelten Betriebsparameter für jedes einzelne Sensormodul geprüft wird, ob der Betriebsparameter für dieses Sensormodul eine signifikante Abweichung von dem für dieses Sensormodul zu erwartenden Betriebsparameter aufzeigt und ob diese Abweichung von der Geschwindigkeit des Fahrzeugs abhängt.

Unter letzterem Aspekt ist verständlich, dass vor der Feststellung einer Fehlanordnung eines Sensormoduls zunächst für verschiedene Fahrzeuggeschwindigkeiten ermittelte Betriebsparameter gesammelt (gespeichert) und ausgewertet werden müssen. Wie oben bereits erläutert, kann hierbei vorgesehen sein, die betreffenden Informationen nur für einen nach oben und/oder unten hin begrenzten Teilbereich von Fahrzeuggeschwindigkeiten zu sammeln bzw. auszuwerten.

In einer Ausführungsform werden die für die Auswertung bzw. Detektion einer Fehlanordnung verwendeten Betriebsparameter für mindestens drei verschiedene Geschwindigkeiten des Fahrzeuges gesammelt.

In einer Ausführungsform werden für jede von einem Detektionsalgorithmus vorbestimmte Geschwindigkeit des Fahrzeuges mindestens zehn Betriebsparameter bzw. zehn Ermittlungsergebnisse des Betriebsparameters jedes Sensormoduls für die z. B. mit einer statistischen Methode durchgeführte Auswertung bzw. Detektion gesammelt.

In einer Ausführungsform werden für die Auswertung bzw. Detektion einer Fehlanordnung Betriebsparameter nur in einem vorbestimmten Bereich von fahrdynamischen Zuständen des Fahrzeuges gesammelt. Dieser Bereich kann z. B. vorsehen, dass das Fahrzeug im Wesentlichen geradeaus fährt (z. B. Querbeschleunigung unterhalb einer vorgegebenen Schwelle) und/oder mit im Wesentlichen konstanter Geschwindigkeit fährt (z. B. Längsbeschleunigung unterhalb einer vorgegebenen Schwelle).

Was den zu ermittelnden zu erwartenden Betriebsparameter für ein bestimmtes Sensormodul anbelangt, so kann diese Ermittlung z. B. basierend auf einem vorbestimmten mathematischen Modell erfolgen, welches den Betriebsparameter (Reifenbetriebsparameter) für sämtliche Sensormodule in Abhängigkeit von einem oder mehreren anderen Betriebsparametern der Reifen und/oder des Fahrzeuges beschreibt.

Das mathematische Modell sollte zweckmäßigerweise eine Abhängigkeit der Betriebsparameter für die einzelnen Sensormodule zumindest von den einzelnen Reifendrücken und von den einzelnen Radlasten an den mit den Reifen versehenen Fahrzeugrädern berücksichtigen. Dies deshalb, weil unterschiedliche Reifendrücke und/oder unterschiedliche auf die Reifen wirkende Radlasten zu unterschiedlichen Reifenverformungszuständen bzw. Reifengeometrien führen, die wiederum beim Abrollen der Reifen auf dem Fahruntergrund zu unterschiedlichen zeitlichen Verläufen der sensorisch erfassten Beschleunigungen führen.

Mittels des mathematischen Modells kann für jedes Sensormodul z. B. eine Plausibilisierung dahingehend durchgeführt werden, ob der vom Sensormodul ermittelte Betriebsparameter in Anbetracht der von den anderen Sensormodulen ermittelten Betriebsparameter plausibel ist oder nicht und ob eine entsprechende Abweichung des Betriebsparameters eine von dem mathematischen Modell vorgegebene Abhängigkeit von der Fahrzeuggeschwindigkeit besitzt.

Dies sei am Beispiel eines Reifenüberwachungssystems mit Sensormodulen erläutert, welche in Abhängigkeit von der sensorisch erfassten Beschleunigung den Betriebsparameter Reifenaufstandsquotient (FPQ) ermitteln, definiert als das Verhältnis einer Länge der Reifenaufstandsfläche zum Außenumfang des betreffenden Reifens, und messtechnisch vom Sensormodul ermittelt z. B. als Verhältnis zwischen einer Zeitspanne des Reifenlatschdurchgangs des Sensormoduls zur Zeitdauer einer vollständigen Radumdrehung.

Weiter angenommen bei dem Fahrzeug handelt es sich um ein zweispurig vierrädriges Fahrzeug mit vier identischen Reifen, in denen ein identischer Reifendruck herrscht und auf die eine identische Radlast wirkt, wobei das Fahrzeug mit konstanter Geschwindigkeit geradeaus fährt. Dann ist zu erwarten, dass der von den einzelnen Sensormodulen ermittelte Betriebsparameter (hier: FPQ) für alle Sensormodule identisch ist.

Bei der Überprüfung auf eine Abweichung des Betriebsparameters eines bestimmten Sensormoduls kann in dieser Situation also z. B. ein Mittelwert (z. B. ein arithmetischer Mittelwert) der Betriebsparameter der anderen drei Sensormodule als der zu erwartende Betriebsparameter verwendet werden. Falls für ein bestimmtes Sensormodul festgestellt wird, dass eine von der Geschwindigkeit des Fahrzeuges abhängige Abweichung des Betriebsparameters von diesem zu erwartenden Betriebsparameter existiert, so kann dies dementsprechend als eine fehlerhafte Anordnung dieses Sensormoduls in der betreffenden Sensormodulhalterung bewertet werden.

Wenn die vorstehenden Voraussetzungen wie z. B. identische Reifendrücke, identische Radlasten etc. nicht erfüllt sind, so kann ein zur Ermittlung des zu erwartenden Betriebsparameters verwendetes mathematisches Modell dies in angemessener Weise berücksichtigen (modellieren).

In dieser Hinsicht kann z. B. berücksichtigt werden, dass ein niedrigerer Reifendruck in einem bestimmten Reifen (sensorisch erfasst durch das betreffende Sensormodul) zu einem größeren Reifenaufstandsquotienten für diesen Reifen führt. Ebenso kann z. B. berücksichtigt werden, dass bei einer Kurvenfahrt des Fahrzeuges, auch abhängig von der Fahrzeuggeschwindigkeit, die Reifenaufstandsquotienten der kurvenäußeren Reifen vergrößert und die Reifenaufstandsquotienten der kurveninneren Reifen verkleinert sind.

In einer bevorzugten Ausführungsform erfolgt eine Ermittlung des für ein bestimmtes Sensormodul zu erwartenden Betriebsparameters basierend auf einer Mittelwertbildung von normierten Betriebsparametern der übrigen Sensormodule, wobei die Normierung so vorgesehen ist, dass damit die auch bei ordnungsgemäßer Anordnung sämtlicher Sensormodule in den Sensormodulhalterungen physikalisch noch verbleibenden Einflüsse durch unterschiedliche Reifendrücke und/oder unterschiedliche Radlasten und/oder der Einfluss des Fahrzustandes (Geschwindigkeit, Fahrbahnneigung, Lenkwinkel etc.) kompensiert werden.

In einer Ausführungsform erfolgt die Ermittlung des zu erwartenden Betriebsparameters basierend auf dem vorerwähnten mathematischen Modell, wobei dieses Modell auch eine Abhängigkeit der Betriebsparameter für die einzelnen Sensormodule von der Geschwindigkeit des Fahrzeuges berücksichtigt. Beispielsweise könnte in dieser Weise eine Fehlanordnung des Sensormoduls dadurch festgestellt werden, dass die Geschwindigkeitsabhängigkeit des von diesem Sensormodul ermittelten Betriebsparameters eine signifikant andere ist als die gemäß des Modells erwartete und/oder die bei den anderen der Reifen beobachtete Geschwindigkeitsabhängigkeit.

In einer Ausführungsform der Erfindung ist vorgesehen, dass die Detektion der Fehlanordnung in programmgesteuerter Weise durchgeführt wird, wobei dies zweckmäßigerweise mittels der Empfangs- und Auswerteeinrichtung des betreffenden Reifenüberwachungssystems realisiert sein kann.

Sofern die Empfangs- und Auswerteeinrichtung des Reifenüberwachungssystems nicht selbst eine Ermittlung der momentanen Geschwindigkeit des Fahrzeuges durchführt (z. B. basierend auf den sensorisch erfassten Beschleunigungen an den Anordnungsstellen der Sensormodule), so kann vorgesehen sein, dass eine Information über die aktuelle Fahrzeuggeschwindigkeit von anderen Teilen einer Fahrzeugelektronik (z. B. einer Radsensorik und/oder einer GPS-Einrichtung) an die Empfangs- und Auswerteeinrichtung kommuniziert wird.

Ein weiterer Aspekt der vorliegenden Erfindung betrifft ein Reifenüberwachungssystem für ein Fahrzeug, aufweisend:
- mehrere in einer jeweiligen Sensormodulhalterung eines jeweiligen Reifens eines Fahrzeuges anordenbare Sensormodule, die jeweils dazu ausgebildet sind, in Abhängigkeit von einer sensorisch erfassten Beschleunigung an der Anordnungsstelle des Sensormoduls einen Betriebsparameter des betreffenden Reifens zu ermitteln und drahtlos zu senden, und
- eine in dem Fahrzeug anordenbare Empfangs- und Auswerteeinrichtung zum Empfangen und Auswerten der von den Sensormodulen gesendeten Betriebsparameter der Reifen,
wobei die Empfangs- und Auswerteeinrichtung ferner dazu ausgebildet ist, eine Detektion einer fehlerhaften Anordnung eines Sensormoduls der mehreren Sensormodule in der betreffenden Sensormodulhalterung durchzuführen, indem basierend auf einem Vergleich der von den Sensormodulen ermittelten Betriebsparameter festgestellt wird, dass für dieses Sensormodul eine von der Geschwindigkeit des Fahrzeuges abhängige Abweichung des Betriebsparameters von einem für dieses Sensormodul zu erwartenden Betriebsparameter existiert.

Die für das Detektionsverfahren gemäß dem ersten Aspekt der Erfindung beschriebenen Ausführungsformen und besonderen Ausgestaltungen können, einzeln oder in beliebiger Kombination, in entsprechender Weise auch als Ausführungsformen bzw. besondere Ausgestaltungen des Reifenüberwachungssystems gemäß dem weiteren Aspekt der Erfindung vorgesehen sein und umgekehrt.

Die Erfindung wird nachfolgend anhand von Ausführungsbeispielen mit Bezug auf die beigefügten Zeichnungen weiter beschrieben. Es stellen dar:
- Fig. 1: eine schematische Seitenansicht eines Fahrzeugrades mit einem Reifen, in dem ein in einer Sensormodulhalterung gehaltenes Sensormodul angeordnet ist,
- Fig. 2: ein Blockschaltbild des Sensormoduls von Fig. 1,
- Fig. 3: eine schematische Seitenansicht eines Details des Reifens von Fig. 1 zur Veranschaulichung einer fehlerhaften Anordnung des Sensormoduls in der Sensormodulhalterung,
- Fig. 4: eine weitere schematische Ansicht (Querschnitt) des Details von Fig. 3,
- Fig. 5: eine schematische Draufsicht eines mit einem Reifenüberwachungssystem ausgestatteten Fahrzeuges und
- Fig. 6: eine Darstellung zur Veranschaulichung der Auswirkung einer fehlerhaften Anordnung eines Sensormoduls auf einen mittels dieses Sensormoduls ermittelten Reifenaufstandsquotienten.

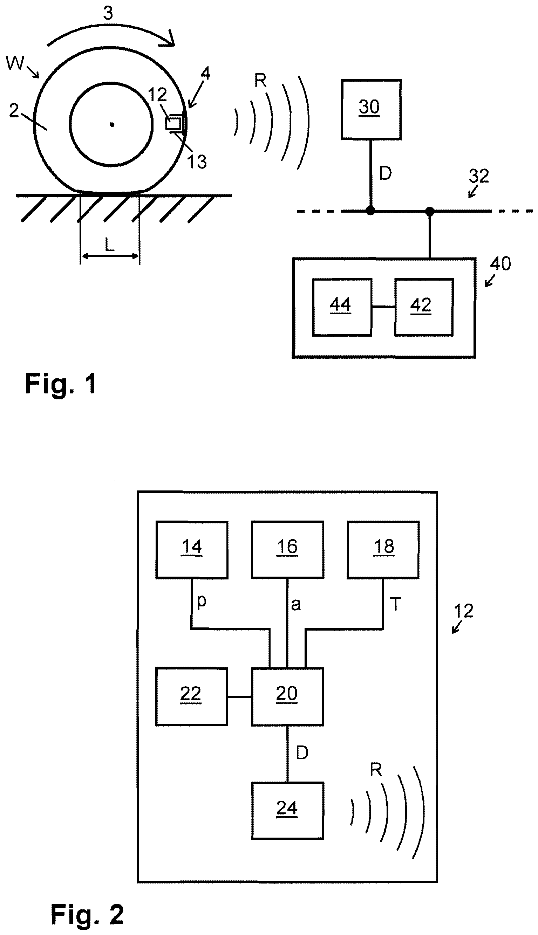

Fig. 1 zeigt ein Fahrzeugrad W aufweisend eine Felge und einen auf der Felge montierten Reifen 2. Eine Drehung des Reifens 2 während der Fahrt des betreffenden Fahrzeuges ist durch einen Pfeil 3 symbolisiert.

In dem Reifen 2 ist als eine Komponente eines Reifenüberwachungssystems des betreffenden Fahrzeuges ein Sensormodul 12 in einer Sensormodulhalterung 13 angeordnet, wobei die Sensormodulhalterung 13 als eine aus einem elastischen Material (z. B. Gummi) gebildete Aufnahme ausgebildet ist, in die das Sensormodul 12 eingesteckt ist.

Die Sensormodulhalterung 13 begrenzt in dem dargestellten Ausführungsbeispiel einen zylindrischen Aufnahmeraum, um einen entsprechend zylindrisch formgestalteten Korpus des Sensormoduls 12 darin aufzunehmen und durch die elastische Umschließung des Sensormodulkorpus zu fixieren. Die Sensormodulhalterung 13 ist in diesem Beispiel an einer Innenseite einer Reifenlauffläche des Reifens 2 aufgeklebt.

Während der Fahrt des Fahrzeuges ermittelt das Sensormodul 12 z. B. insbesondere einen Betriebsparameter, der repräsentativ für eine in Fig. 1 eingezeichnete Länge L einer Reifenaufstandsfläche des Reifens 2 ist.

Fig. 2 zeigt ein Blockschaltbild des Sensormoduls 12, aufweisend einen Drucksensor 14 zum Erfassen eines für einen Druck im Reifen 2 repräsentativen Drucksensorsignals "p", einen Beschleunigungssensor 16 zum Erfassen eines für eine Beschleunigung, in dem dargestellten Ausführungsbeispiel die Radialbeschleunigung, repräsentativen Beschleunigungssensorsignals "a" und einen Temperatursensor 18 zum Erfassen eines für eine Temperatur im Inneren des Reifens 2 repräsentativen Temperatursensorsignals "T".

Das Sensormodul 12 weist ferner eine programmgesteuerte Steuereinrichtung 20 (z. B. einen Mikrocontroller) mit einer zugehörigen Speichereinrichtung 22 zum Speichern eines den Betrieb der Steuereinrichtung 20 steuernden Programms auf. Die Steuereinrichtung 20 empfängt die vorgenannten Sensorsignale p, T, a und ermittelt in Abhängigkeit von diesen Sensorsignalen in programmgesteuerter Weise mehrere Reifenbetriebsparameter, die von Zeit zu Zeit in ein von der Steuereinrichtung 20 erzeugtes Datentelegramm D aufgenommen und mittels einer Funksendeeinrichtung 24 in Form von Funksendungen R an eine in dem Fahrzeug angeordnete und in Fig. 1 ebenfalls dargestellte Funkempfangseinrichtung 30 und von dieser weiter an eine Auswerteeinrichtung 40 gesendet werden.

Eine Empfangs- und Auswerteeinrichtung ist in diesem Ausführungsbeispiel somit gebildet aus der Funkempfangseinrichtung 30 zum Empfangen und Dekodieren der Funksendungen R sowie der Auswerteeinrichtung 40, welche die von der Funkempfangseinrichtung 30 dekodierten Datentelegramme D über ein digitales Bussystem 32 (z. B. CAN-Bus, LIN-Bus oder dergleichen) erhält und dann auswertet bzw. daraus gewonnene Informationen an andere Teile einer Fahrzeugelektronik weiterleitet.

Die Auswerteeinrichtung 40 ist in dem dargestellten Beispiel gebildet von einer programmgesteuerten Rechnereinheit 42 und einer zugeordneten Speichereinheit 44 zum Speichern eines den Betrieb der Rechnereinheit 42 steuernden Programms. In der Praxis kann die Auswerteeinrichtung 40 z. B. auch als eine Teilfunktionalität einer in dem betreffenden Fahrzeug ohnehin vorhandenen zentralen Steuereinrichtung (ECU) implementiert sein.

Als Reifenbetriebsparameter des Reifens 2, die mittels der Funksendungen D an die Empfangs- und Auswerteeinrichtung übermittelt werden, sind in dem dargestellten Beispiel insbesondere der Reifendruck, die Reifentemperatur, die Drehgeschwindigkeit und ein Reifenaufstandsquotient FPQ des Reifens 2 vorgesehen.

Der Reifendruck und die Reifentemperatur werden hierbei unmittelbar anhand der entsprechenden Sensorsignale "p" und "T" ermittelt, wohingegen die Ermittlung der Drehgeschwindigkeit sowie des Reifenaufstandsquotienten FPQ auf einer durch die Steuereinrichtung 20 durchgeführten Auswertung des zeitlichen Verlaufs des für die Radialbeschleunigung an einer Anordnungsstelle 4 des Sensormoduls 12 repräsentativen Sensorsignals "a" beruht.

Für die Ermittlung der Drehgeschwindigkeit besteht z. B. die Möglichkeit, den sich mit jeder Radumdrehung periodisch ändernden Gravitationsanteil des Sensorsignals "a" auszuwerten oder z. B. die Möglichkeit, die Frequenz des Auftretens von Signalcharakteristika in dem Sensorsignal "a" auszuwerten, die bei jedem Durchgang der Anordnungsstelle 4 durch den Reifenlatsch (die Reifenaufstandsfläche) entstehen. Damit kann auch der Reifenaufstandsquotienten FPQ ermittelt werden, der hier als Quotient zwischen der in Fig. 1 eingezeichneten Länge L der Reifenaufstandsfläche und dem Gesamtumfang des Reifens 2 definiert ist.

Bei jedem Aufschlagen des Sensormoduls 12 beim Eintritt in die Reifenaufstandsfläche und bei jedem Abheben des Sensormoduls 12 beim Austritt aus der Reifenaufstandsfläche zeigen sich typische Signalcharakteristika im Sensorsignal "a", so dass der Betriebsparameter FPQ als Quotient zwischen der Zeitspanne zwischen Aufschlagen und Abheben und der Zeitdauer einer gesamten Umdrehung (360°) des Reifens 2 berechnet werden kann.

Neben den bereits genannten Betriebsparametern können in Abhängigkeit von den sensorisch erfassten Größen von der Steuereinrichtung 20 noch weitere Betriebsparameter ermittelt und an die Empfangs- und Auswerteeinrichtung übermittelt werden.

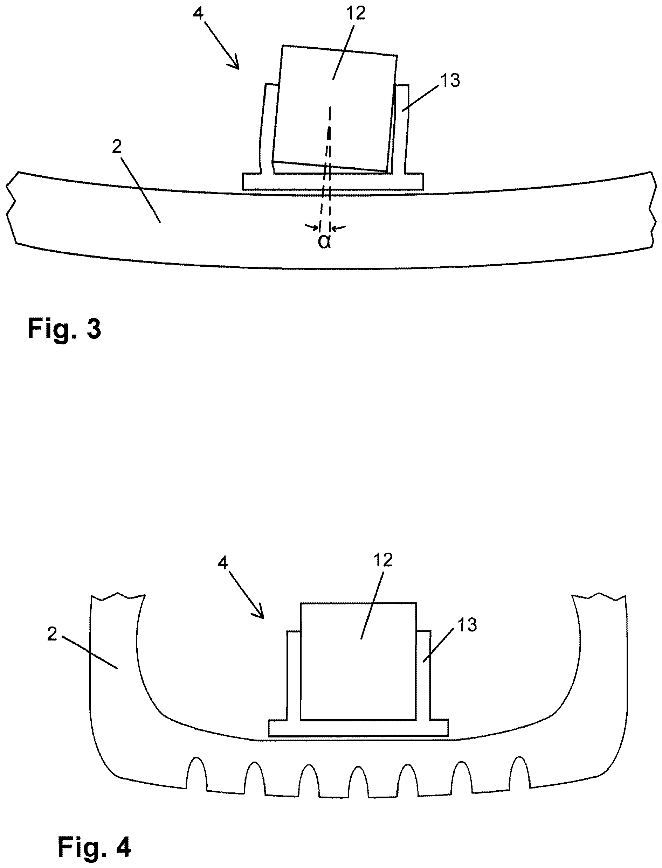

Die Fig. 3 und 4 veranschaulichen nochmals anhand vergrößerter (nicht maßstäblicher) Darstellungen die Anordnung des Sensormoduls 12 in der Sensormodulhalterung 13 an der Anordnungsstelle 4 im Reifen 2.

In Fig. 3 ist hierbei eine in der Praxis nicht auszuschließende fehlerhafte Anordnung des Sensormoduls 12 in der Sensormodulhalterung 13 verdeutlicht. Das Sensormodul 12 ist in diesem Beispiel in Umfangsrichtung des Reifens 2 betrachtet etwas verkippt (mit einem Neigungswinkel α) angeordnet.

Für die Ermittlung des Reifendrucks und der Reifentemperatur ist eine derartige Fehlanordnung des Sensormoduls 12 in der Regel kein Problem. Jedoch kann diese Fehlanordnung prinzipiell insbesondere sämtliche von dem Sensormodul 12 in Abhängigkeit von der erfassten Beschleunigung (Signal "a") ermittelten Betriebsparameter, wie hier insbesondere den ermittelten Reifenaufstandsquotienten FPQ, verfälschen. Das schräggestellte Sensormodul 12 vermag nicht mehr wie eigentlich vorgesehen die Radialbeschleunigung zu erfassen, sondern erfasst in der dargestellten Situation tatsächlich eine etwas geneigt bezüglich der Radialrichtung orientierte Beschleunigung an der Anordnungsstelle 4.

Die in Fig. 3 veranschaulichte Fehlanordnung des Sensormoduls 12 führt zu einer Verfälschung des Ergebnisses der sensorischen Erfassung der Radialbeschleunigung. Dieser Fehlerfall beeinträchtigt somit auch die Funktion und Zuverlässigkeit des Reifenüberwachungssystems, in welchem ein derart fehlerhaft installiertes Sensormodul 12 eingebunden ist.

Die vorliegende Erfindung zielt darauf ab, eine Fehlanordnung eines Sensormoduls wie z. B. in Fig. 3 dargestellt, zu detektieren, so dass z. B. von dem betreffenden Sensormodul gelieferte Betriebsparameter von der Empfangs- und Auswerteeinrichtung als insgesamt oder teilweise ungültig bewertet werden können und/oder von einer Weiterverwendung ausgeschlossen werden können.

In Fig. 4 ist hingegen eine fehlerfreie bzw. korrekte Anordnung des Sensormoduls 12 in der Sensormodulhalterung 13 verdeutlicht.

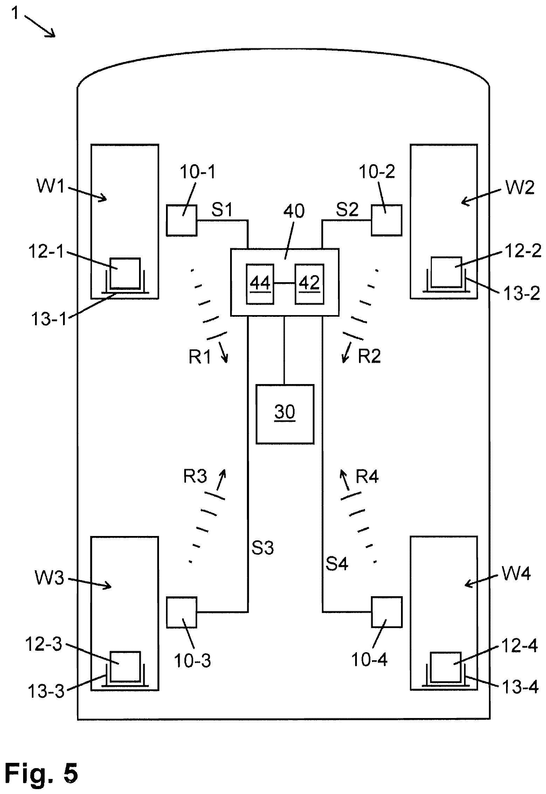

Fig. 5 zeigt ein mit einem Reifenüberwachungssystem gemäß einer Ausführungsform ausgestattetes Fahrzeug 1, bei dem es sich in dem dargestellten Beispiel um ein zweispurig vierrädriges Straßenkraftfahrzeug (z. B. einen PKW) mit zwei Vorderrädern W1, W2 und zwei Hinterrädern W3, W4 handelt. Die Räder W1 bis W4 sind jeweils mit einem Reifen ausgestattet, in dem ein Sensormodul 12-1, 12-2, 12-3 bzw. 12-4 angeordnet ist. Die zugehörigen Sensormodulhalterungen sind in Fig. 5 mit den Bezugszahlen 13-1 bis 13-4 bezeichnet.

Bei der nachfolgenden Beschreibung des Reifenüberwachungssystems von Fig. 5 sei angenommen, dass jedes der Fahrzeugräder W1 bis W4 so ausgebildet ist, wie dies bereits mit Bezug auf die Figs. 1 bis 4 für das Fahrzeugrad W (Fig. 1) beschrieben wurde, und mithin auch jedes der Sensormodule 12-1 bis 12-4 samt zugehörigen Sensormodulhalterungen 13-1 bis 13-4 so ausgebildet sind und so funktionieren, wie mit Bezug auf die Figs. 1 bis 4 für die Komponenten 12 bzw. 13 bereits beschrieben.

Das in dem Fahrzeug 1 eingesetzte Reifenüberwachungssystem beinhaltet die Sensormodule 12-1 bis 12-4, die jeweils in einer zugeordneten Sensormodulhalterung der Sensormodulhalterungen 13-1 bis 13-4 des jeweiligen in Fig. 5 nicht dargestellten Reifens des Fahrzeuges 1 angeordnet sind und jeweils dazu ausgebildet sind, in Abhängigkeit von unter anderem der sensorisch erfassten Beschleunigung (hier der Radialbeschleunigung) mehrere Betriebsparameter des betreffenden Reifens, darunter insbesondere den Reifenaufstandsquotienten FPQ, zu ermitteln und drahtlos (als Funksendungen R1 bis R4) zu senden.

Ferner beinhaltet das Reifenüberwachungssystem die in dem Fahrzeug 1 angeordnete Empfangs- und Auswerteeinrichtung zum Empfangen und Auswerten der von den Sensormodulen 12-1 bis 12-4 gesendeten Betriebsparameter.

Die Empfangs- und Auswerteeinrichtung, hier bestehend aus der Funkempfangseinrichtung 30 und der über den Kommunikationsbus 32 damit verbundenen programmgesteuerten Auswerteinrichtung 40, ist dazu ausgebildet, eine Detektion einer fehlerhaften Anordnung eines der Sensormodule 12-1 bis 12-4 (vgl. z. B. Fig. 3) in der betreffenden Sensormodulhalterung 13-1, 13-2, 13-3 bzw. 13-4 durchzuführen, indem basierend auf einem Vergleich der von allen Sensormodulen 12-1 bis 12-4 ermittelten Reifenaufstandsquotienten FPQ festgestellt wird, dass für dieses Sensormodul eine von der Geschwindigkeit des Fahrzeuges 1 abhängige Abweichung des Reifenaufstandsquotienten FPQ von einem für dieses Sensormodul zu erwartenden Reifenaufstandsquotienten FPQ existiert.

Bei dieser Detektion kann z. B. eine Art von Plausibilitätsüberprüfung dergestalt durchgeführt werden, dass für jedes der Sensormodule 12-1 bis 12-4 jeweils überprüft wird, ob der von dem betreffenden Sensormodul gelieferte FPQ-Wert in Anbetracht der von den übrigen drei Sensormodulen gelieferten FPQ-Werte plausibel ist oder nicht. Im Falle einer festgestellten Unplausibilität, gleichbedeutend mit einer signifikanten (z. B. über einer vorbestimmten Schwelle liegenden) Abweichung des FPQ-Werts von einem bei ordnungsgemäßer Sensormodulanordnung zu erwartenden FPQ-Wert, wird dies im Falle einer Abhängigkeit der Abweichung von der Geschwindigkeit des Fahrzeuges 1 als Fehlanordnung des betreffenden Sensormoduls gewertet.

Für die Ermittlung der Geschwindigkeit des Fahrzeuges 1 werden in dem dargestellten Ausführungsbeispiel im Fahrzeug jeweils einem der Räder W1 bis W4 zugeordnet installierte Radsensoren (Drehzahlsensoren) 10-1 bis 10-4 verwendet. Von diesen Radsensoren 10-1 bis 10-4 gelieferte Sensorsignale S1 bis S4 werden hierbei leitungsgebunden (z. B. unter Verwendung des digitalen Bussystems 32) an die Auswerteeinrichtung 40 übertragen, welche daraus die momentane Fahrzeuggeschwindigkeit ermittelt.

Auf Basis der Kenntnis der momentanen Fahrzeuggeschwindigkeit sammelt die Auswerteeinrichtung 40 während der Fahrt des Fahrzeuges 1 fortlaufend Daten beinhaltend die von den Sensormodulen 12-1 bis 12-4 gelieferten FPQ-Werte jeweils in Zuordnung zu einer betreffenden Identifikation des liefernden Sensormoduls (z. B. kodiert in der jeweiligen Funksendung R1, R2, R3 bzw. R4) und in Zuordnung zu der zum betreffenden Zeitpunkt vorliegenden Geschwindigkeit des Fahrzeuges 1. Anhand dieser Daten wird von der Auswerteeinrichtung 40 die erläuterte Detektion durchgeführt.

Wenn beispielsweise das in dem Rad W4 installierte Sensormodul 12-4 fehlerhaft angeordnet ist und im Rahmen des Detektionsverfahrens die Plausibilität des von dem Sensormodul 12-4 gelieferten FPQ-Werts überprüft wird, so kann von der Auswerteeinrichtung 40 anhand der für verschiedene Fahrzeuggeschwindigkeiten gesammelten Daten z. B. eine Abweichung des FPQ-Werts von einem zu erwartenden FPQ-Wert festgestellt werden. Der zu erwartende FPQ-Wert kann z. B. gemäß eines vorbestimmten, in der Auswerteeinrichtung 40 ablaufenden Algorithmus z. B. aus den von den übrigen Sensormodulen 12-1 bis 12-3 gelieferten FPQ-Werten ermittelt werden. Vor einer endgültigen Feststellung der Fehlanordnung wird hierbei jedoch auch überprüft, ob die festgestellte Abweichung in einer durch das Detektionsverfahren definierten Weise von der Fahrzeuggeschwindigkeit anhängt oder nicht (z. B. Abweichung steigt/sinkt mit steigender Fahrzeuggeschwindigkeit).

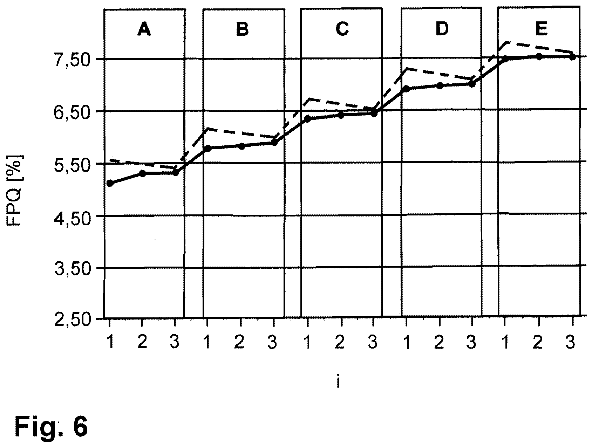

Fig. 6 veranschaulicht beispielhaft die Auswirkung einer Fehlanordnung eines Sensormoduls auf den von diesem Sensormodul ermittelten FPQ-Wert.

In Fig. 6 ist der FPQ-Wert nach oben aufgetragen. Die durch Punkte bzw. eine durchgezogene Linie dargestellten FPQ-Werte sind diejenigen eines ordnungsgemäßen angeordneten Sensormoduls. Demgegenüber veranschaulicht die gestrichelte Linie die FPQ-Werte eines in gleicher Fahrsituation fehlerhaft angeordneten Sensormoduls.

In Fig. 6 veranschaulichen die fünf Teildarstellungen "A" bis "E" zunächst die Abhängigkeit des FPQ-Werts von einer aktuell auf den betreffenden Reifen wirkenden Radlast. Für die einzelnen Teildiagramme A bis E liegen folgende Radlasten zugrunde: 525 kg (A), 600 kg (B), 675 kg (C), 750 kg (D) und 825 kg (E). Daraus ist ersichtlich, dass der FPQ-Wert umso größer ist, je größer die Radlast ist.

Innerhalb jeder der Teildiagramme A bis E sind jeweils drei Ergebnisse für den FPQ-Wert angegeben, gekennzeichnet durch einen Index i mit i = 1, 2 oder 3, wobei der Index i wie folgt repräsentativ für die betreffende Fahrzeuggeschwindigkeit ist: 40 km/h (i=1), 60 km/h (i=2) und 90 km/h (i=3). Daraus ist ersichtlich, dass in dem dargestellten Beispiel für das ordnungsgemäß angeordnete Sensormodul eine gewisse Abhängigkeit des FPQ-Werts von der Fahrzeuggeschwindigkeit besteht. In dem dargestellten Beispiel wird mit steigender Fahrzeuggeschwindigkeit der FPQ-Wert tendenziell etwas größer.

Für den FPQ-Wert des fehlerhaft angeordneten Sensormoduls (gestrichelte Linie) ergibt sich hingegen eine signifikante Abweichung gegenüber dem zu erwartenden FPQ-Wert (durchgezogene Linie), wobei diese Abweichung von der Fahrzeuggeschwindigkeit abhängig ist. In dem dargestellten Beispiel gilt, und zwar unabhängig von der Radlast, dass sich die Abweichung im betrachteten Geschwindigkeitsbereich von 40 km/h bis 90 km/h mit steigender Fahrzeuggeschwindigkeit monoton verkleinert.

In dem dargestellten Beispiel ist diese Abweichung bei einer Geschwindigkeit von 40 km/h (i=1) relativ groß und bei einer Geschwindigkeit von 90 km/h (i=3) nahezu Null.

Übertragen auf das in Fig. 5 dargestellte Ausführungsbeispiel eines Reifenüberwachungssystems kann in diesem Reifenüberwachungssystem als ein Kriterium für die Feststellung eines fehlerhaft angeordneten Sensormoduls (12-1, 12-2, 12-3 oder 12-4) z. B. vorgesehen sein, dass im Teilbereich von 40 km/h bis 90 km/h der Fahrzeuggeschwindigkeit für das betreffende Sensormodul ein sich mit steigender Fahrzeuggeschwindigkeit monoton verkleinernder FPQ-Wert ergibt.

### Bezugszeichenliste

- 1: Fahrzeug
- W: Fahrzeugrad
- 2: Reifen
- 3: Pfeil
- 4: Anordnungsstelle
- L: Länge der Reifenaufstandsfläche
- FPQ: Reifenaufstandsquotient
- 10-1: Radsensor
- 10-2: Radsensor
- 10-3: Radsensor
- 10-4: Radsensor
- 12: Sensormodul
- 13: Sensormodulhalterung
- 14: Drucksensor
- p: Drucksensorsignal
- 16: Beschleunigungssensor
- a: Beschleunigungssensorsignal
- 18: Temperatursensor
- T: Temperatursensorsignal
- 20: Steuereinrichtung
- 22: Speichereinrichtung
- 24: Funksendeeinrichtung
- D: Datentelegramm
- R: Funksendungen
- 30: Funkempfangseinrichtung
- 32: Bussystem
- 40: Auswerteeinrichtung
- 42: Rechnereinheit
- 44: Speichereinheit

## Patentansprüche

1. Verfahren zur Detektion einer fehlerhaften Anordnung eines Sensormoduls (12) in einer Sensormodulhalterung (13) in einem Reifen (2) eines mit einem Reifenüberwachungssystem ausgestatteten Fahrzeuges (1),
wobei das Reifenüberwachungssystem mehrere in einer jeweiligen Sensormodulhalterung (13) eines jeweiligen Reifens (2) des Fahrzeuges (1) angeordnete Sensormodule (12) aufweist, die jeweils in Abhängigkeit von einer sensorisch erfassten Beschleunigung an der Anordnungsstelle (4) des Sensormoduls (12) einen Betriebsparameter (FPQ) des betreffenden Reifens (2) ermitteln und drahtlos an eine in dem Fahrzeug (1) angeordnete Empfangs- und Auswerteeinrichtung (30, 40) senden,
wobei eine Detektion einer fehlerhaften Anordnung eines Sensormoduls der Sensormodule (12) in der betreffenden Sensormodulhalterung (13) dadurch erfolgt, dass basierend auf einem Vergleich der von den Sensormodulen (12) ermittelten Betriebsparameter (FPQ) festgestellt wird, dass für dieses Sensormodul (12) eine von einer Geschwindigkeit des Fahrzeuges (1) abhängige Abweichung des Betriebsparameters (FPQ) von einem für dieses Sensormodul (12) zu erwartenden Betriebsparameter (FPQ) existiert,
**dadurch gekennzeichnet, dass**
die Feststellung der Abweichung eine Feststellung einer mit variierender Geschwindigkeit des Fahrzeuges (1) monoton sich verändernden Abweichung beinhaltet.

2. Verfahren nach Anspruch 1, wobei die Sensormodulhalterungen (13) jeweils als eine aus einem elastischen Material gebildete Aufnahme zum Einstecken des jeweiligen Sensormoduls (12) ausgebildet sind.

3. Verfahren nach einem der vorangehenden Ansprüche, wobei die Sensormodulhalterungen (13) jeweils an einer Innenseite einer Reifenlauffläche des jeweiligen Reifens (2) befestigt sind.

4. Verfahren nach einem der vorangehenden Ansprüche, wobei das Reifenüberwachungssystem als ein Reifendrucküberwachungssystem ausgebildet ist, wobei die Sensormodule (12) jeweils einen Druck in dem jeweiligen Reifen (2) erfassen und als einen Betriebsparameter des betreffenden Reifens (2) den Reifendruck drahtlos an die Empfangs- und Auswerteeinrichtung (30, 40) senden.

5. Verfahren nach einem der vorangehenden Ansprüche, wobei die von den Sensormodulen (12) jeweils sensorisch erfasste Beschleunigung an der Anordnungsstelle (4) des betreffenden Sensormoduls (12) eine Radialbeschleunigung und/oder eine Tangentialbeschleunigung beinhaltet.

6. Verfahren nach einem der vorangehenden Ansprüche, wobei der von den Sensormodulen (12) jeweils ermittelte Betriebsparameter (FPQ) repräsentativ für eine Länge (L) einer Reifenaufstandsfläche des betreffenden Reifens (2) ist.

7. Verfahren nach Anspruch 6, wobei der von den Sensormodulen (12) jeweils ermittelte Betriebsparameter ein Verhältnis der Länge (L) der Reifenaufstandsfläche zu einem Außenumfang des betreffenden Reifens (2) angibt.

8. Verfahren nach einem der vorangehenden Ansprüche, wobei die Feststellung der Abweichung in einem vorbestimmten Teilbereich eines für das Fahrzeug (1) betriebsmäßig vorgesehenen Gesamtbereichs der Geschwindigkeit des Fahrzeuges (1) erfolgt.

9. Verfahren nach Anspruch 8, wobei der genannte Teilbereich mit einer Untergrenze von mindestens 5 km/h und höchstens 60 km/h vorbestimmt ist.

10. Reifenüberwachungssystem für ein Fahrzeug, aufweisend
- mehrere in einer jeweiligen Sensormodulhalterung (13) eines jeweiligen Reifens (2) eines Fahrzeuges (1) anordenbare Sensormodule (12), die jeweils dazu ausgebildet sind, in Abhängigkeit von einer sensorisch erfassten Beschleunigung an der Anordnungsstelle (4) des Sensormoduls (12) einen Betriebsparameter (FPQ) des betreffenden Reifens (2) zu ermitteln und drahtlos zu senden,
- eine in dem Fahrzeug (1) anordenbare Empfangs- und Auswerteeinrichtung (30, 40) zum Empfangen und Auswerten der von den Sensormodulen (12) gesendeten Betriebsparameter (FPQ) der Reifen (2),
wobei die Empfangs- und Auswerteeinrichtung (30, 40) ferner dazu ausgebildet ist, eine Detektion einer fehlerhaften Anordnung eines Sensormoduls der Sensormodule (12) in der betreffenden Sensormodulhalterung (13) durchzuführen, indem basierend auf einem Vergleich der von den Sensormodulen (12) ermittelten Betriebsparameter (FPQ) festgestellt wird, dass für dieses Sensormodul (12) eine von einer Geschwindigkeit des Fahrzeuges (1) abhängige Abweichung des Betriebsparameters (FPQ) von einem für dieses Sensormodul (12) zu erwartenden Betriebsparameter (FPQ) existiert,
**dadurch gekennzeichnet, dass**
die Feststellung der Abweichung eine Feststellung einer mit variierender Geschwindigkeit des Fahrzeuges (1) monoton sich verändernden Abweichung beinhaltet.

11. Reifenüberwachungssystem nach Anspruch 10, wobei der von den Sensormodulen (12) jeweils ermittelte Betriebsparameter (FPQ) repräsentativ für eine Länge (L) einer Reifenaufstandsfläche des betreffenden Reifens (2) ist.

12. Reifenüberwachungssystem nach Anspruch 11, wobei der von den Sensormodulen (12) jeweils ermittelte Betriebsparameter ein Verhältnis der Länge (L) der Reifenaufstandsfläche zu einem Außenumfang des betreffenden Reifens (2) angibt.

13. Reifenüberwachungssystem nach einem der Ansprüche 10 bis 12, wobei die Feststellung der Abweichung in einem vorbestimmten Teilbereich eines für das Fahrzeug (1) betriebsmäßig vorgesehenen Gesamtbereichs der Geschwindigkeit des Fahrzeuges (1) erfolgt.

14. Reifenüberwachungssystem nach Anspruch 13, wobei der genannte Teilbereich mit einer Untergrenze von mindestens 5 km/h und höchstens 60 km/h vorbestimmt ist.

## Claims

1. Method for detecting a faulty arrangement of a sensor module (12) in a sensor module holder (13) in a tyre (2) of a vehicle (1) equipped with a tyre monitoring system,
the tyre monitoring system having multiple sensor modules (12) arranged in a respective sensor module holder (13) of a respective tyre (2) of the vehicle (1), which respectively determine in dependence on a sensor-detected acceleration at the arrangement location (4) of the sensor module (12) an operating parameter (FPQ) of the tyre (2) in question and send it wirelessly to a receiving and evaluating device (30, 40) arranged in the vehicle (1),
with a detection of a faulty arrangement of a sensor module of the sensor modules (12) in the sensor module holder (13) in question being performed by ascertaining on the basis of a comparison of the operating parameters (FPQ) determined by the sensor modules (12) that there is for this sensor module (12) a discrepancy, dependent on a speed of the vehicle (1), between the operating parameter (FPQ) and an operating parameter (FPQ) to be expected for this sensor module (12), **characterized in that**
the ascertainment of the discrepancy includes an ascertainment of a discrepancy that changes monotonically with varying speed of the vehicle (1).

2. Method according to Claim 1, the sensor module holders (13) being respectively designed as a receptacle formed from an elastic material for inserting the respective sensor module (12).

3. Method according to one of the preceding claims, the sensor module holders (13) being respectively fastened on an inner side of a tyre tread of the respective tyre (2).

4. Method according to one of the preceding claims, the tyre monitoring system being designed as a tyre pressure monitoring system, the sensor modules (12) respectively detecting a pressure in the respective tyre (2) and sending the tyre pressure wirelessly to the receiving and evaluating device (30, 40) as an operating parameter of the tyre (2) in question.

5. Method according to one of the preceding claims, the acceleration respectively detected by the sensors of the sensor modules (12) at the arrangement location (4) of the sensor module (12) in question including a radial acceleration and/or a tangential acceleration.

6. Method according to one of the preceding claims, the operating parameter (FPQ) respectively determined by the sensor modules (12) being representative of a length (L) of a tyre contact area of the tyre (2) in question.

7. Method according to Claim 6, the operating parameter respectively determined by the sensor modules (12) giving a ratio of the length (L) of the tyre contact area to an outer circumference of the tyre (2) in question.

8. Method according to one of the preceding claims, the ascertainment of the discrepancy taking place in a predetermined partial range of an overall range of the speed of the vehicle (1) that is operationally intended for the vehicle (1).

9. Method according to Claim 8, the stated partial range being predetermined with a lower limit of at least 5 km/h and at most 60 km/h.

10. Tyre monitoring system for a vehicle, comprising
- multiple sensor modules (12) which can be arranged in a respective sensor module holder (13) of a respective tyre (2) of a vehicle (1) and are respectively designed to determine and wirelessly send an operating parameter (FPQ) of the tyre (2) in question in dependence on a sensor-detected acceleration at the arrangement location (4) of the sensor module (12),
- a receiving and evaluating device (30, 40) which can be arranged in the vehicle (1) for receiving and evaluating the operating parameters (FPQ) of the tyres (2) sent by the sensor modules (12),
the receiving and evaluating device (30, 40) also being designed to detect a faulty arrangement of a sensor module of the sensor modules (12) in the sensor module holder (13) in question by ascertaining on the basis of a comparison of the operating parameters (FPQ) determined by the sensor modules (12) that there is for this sensor module (12) a discrepancy, dependent on a speed of the vehicle (1), between the operating parameter (FPQ) and an operating parameter (FPQ) to be expected for this sensor module (12),
**characterized in that**
the ascertainment of the discrepancy includes an ascertainment of a discrepancy that changes monotonically with varying speed of the vehicle (1).

11. Tyre monitoring system according to Claim 10, the operating parameter (FPQ) respectively determined by the sensor modules (12) being representative of a length (L) of a tyre contact area of the tyre (2) in question.

12. Tyre monitoring system according to Claim 11, the operating parameter respectively determined by the sensor modules (12) giving a ratio of the length (L) of the tyre contact area to an outer circumference of the tyre (2) in question.

13. Tyre monitoring system according to one of Claims 10 to 12, the ascertainment of the discrepancy taking place in a predetermined partial range of an overall range of the speed of the vehicle (1) that is operationally intended for the vehicle (1).

14. Tyre monitoring system according to Claim 13, the stated partial range being predetermined with a lower limit of at least 5 km/h and at most 60 km/h.

## Revendications

1. Procédé permettant de détecter placement incorrect d'un module de capteur (12) dans un support de module de capteur (13) dans un pneu (2) d'un véhicule (1) équipé d'un système de surveillance de pneu,
dans lequel le système de surveillance de pneu présente plusieurs modules de capteur (12) placés dans un support de module de capteur (13) respectif d'un pneu (2) respectif du véhicule (1) et qui établissent respectivement en fonction d'une accélération détectée par capteur à l'endroit de placement (4) du module de capteur (12) un paramètre de fonctionnement (FPQ) du pneu (2) concerné et l'envoient sans fil à un dispositif de réception et d'évaluation (30, 40) placé dans le véhicule (1),
dans lequel une détection d'un placement incorrect d'un module de capteur parmi les modules de capteur (12) dans le support de module de capteur (13) concerné est effectuée en constatant sur la base d'une comparaison des paramètres de fonctionnement (FPQ) établis par les modules de capteur (12) qu'il existe pour ce module de capteur (12) un écart du paramètre de fonctionnement (FPQ), dépendant d'une vitesse du véhicule (1), par rapport à un paramètre de fonctionnement (FPQ) attendu pour ce module de capteur (12),
**caractérisé en ce que**
la constatation de l'écart comprend une constatation d'un écart qui change de manière monotone selon une vitesse variable du véhicule (1).

2. Procédé selon la revendication 1, dans lequel les supports de module de capteur (13) sont réalisés respectivement sous la forme d'un logement formé à partir d'un matériau élastique, pour l'insertion du module de capteur (12) respectif.

3. Procédé selon l'une quelconque des revendications précédentes, dans lequel les supports de module de capteur (13) sont fixés respectivement sur une face intérieure d'une bande de roulement du pneu (2) respectif.

4. Procédé selon l'une quelconque des revendications précédentes, dans lequel le système de surveillance de pneu est réalisé sous forme de système de surveillance de pression de pneu, dans lequel les modules de capteur (12) détectent respectivement une pression dans le pneu (2) respectif et envoient sans fil au dispositif de réception et d'évaluation (30, 40) la pression de pneu en tant que paramètre de fonctionnement du pneu (2) concerné.

5. Procédé selon l'une quelconque des revendications précédentes, dans lequel l'accélération détectée respectivement par capteur par les modules de capteur (12) à l'endroit de placement (4) du module de capteur (12) comprend une accélération radiale et/ou une accélération tangentielle.

6. Procédé selon l'une quelconque des revendications précédentes, dans lequel le paramètre de fonctionnement (FPQ) respectivement établi par les modules de capteur (12) représente une longueur (L) d'une surface de contact de pneu du pneu (2) concerné.

7. Procédé selon la revendication 6, dans lequel le paramètre de fonctionnement respectivement établi par les modules de capteur (12) indique un rapport entre la longueur (L) de la surface de contact de pneu et une circonférence extérieure du pneu (2) concerné.

8. Procédé selon l'une quelconque des revendications précédentes, dans lequel la constatation de l'écart a lieu dans une plage partielle prédéterminée d'une plage totale de la vitesse du véhicule (1), prévue pour le fonctionnement du véhicule (1).

9. Procédé selon la revendication 8, dans lequel ladite plage partielle est prédéterminée avec une limite inférieure de 5 km/h au moins et de 60 km/h au plus.

10. Système de surveillance de pneu pour un véhicule, présentant
- plusieurs modules de capteur (12) pouvant être placés dans un support de module de capteur (13) respectif d'un pneu (2) respectif d'un véhicule (1), qui sont respectivement réalisés pour établir, en fonction d'une accélération détectée par capteur à l'endroit de placement (4) du module de capteur (12), un paramètre de fonctionnement (FPQ) du pneu (2) concerné et pour l'envoyer sans fil,
- un dispositif de réception et d'évaluation (30, 40) pouvant être placé dans le véhicule (1) pour recevoir et évaluer les paramètres de fonctionnement (FPQ) des pneus (2), envoyés par les modules de capteur (12),
dans lequel le dispositif de réception et d'évaluation (30, 40) est en outre réalisé pour effectuer une détection d'un placement incorrect d'un module de capteur parmi les modules de capteur (12) dans le support de module de capteur (13) concerné en constatant sur la base d'une comparaison des paramètres de fonctionnement (FPQ) établis par les modules de capteur (12) qu'il existe pour ce module de capteur (12) un écart du paramètre de fonctionnement (FPQ), dépendant d'une vitesse du véhicule (1), par rapport à un paramètre de fonctionnement (FPQ) attendu pour ce module de capteur (12),
**caractérisé en ce que**
la constatation de l'écart comprend une constatation d'un écart qui change de manière monotone selon une vitesse variable du véhicule (1).

11. Système de surveillance de pneu selon la revendication 10, dans lequel le paramètre de fonctionnement (FPQ) respectivement établi par les modules de capteur (12) représente une longueur (L) d'une surface de contact de pneu du pneu (2) concerné.

12. Système de surveillance de pneu selon la revendication 11, dans lequel le paramètre de fonctionnement respectivement établi par les modules de capteur (12) indique un rapport entre la longueur (L) de la surface de contact de pneu et une circonférence extérieure du pneu (2) concerné.

13. Système de surveillance de pneu selon l'une quelconque des revendications 10 à 12, dans lequel la constatation de l'écart a lieu dans une plage partielle prédéterminée d'une plage totale de la vitesse du véhicule (1), prévue pour le fonctionnement du véhicule (1).

14. Système de surveillance de pneu selon la revendication 13, dans lequel ladite plage partielle est prédéterminée avec une limite inférieure de 5 km/h au moins et de 60 km/h au plus.
